# EUROPÄISCHE PATENTSCHRIFT

(11) **EP 2 897 515 B1**
(45) Veröffentlichungstag und Bekanntmachung des Hinweises auf die Patenterteilung: **11.11.2020**
(21) Anmeldenummer: 13759703.5
(22) Anmeldetag: 04.09.2013
(51) Int. Cl.: F16L 37/084, A47L 7/00, A47L 9/24, B23Q 11/00

(54) **ABSAUGANSCHLUSSSYSTEM**
EXTRACTION CONNECTION SYSTEM
SYSTÈME DE RACCORDEMENT D'ASPIRATION

(30) Priorität: 20.09.2012 DE 102012216884
(43) Veröffentlichungstag der Anmeldung: 29.07.2015
(73) Patentinhaber: Robert Bosch GmbH, 70442 Stuttgart (DE)
(72) Erfinder: SCHUELE, Manfred, 74429 Sulzbach-Laufen (DE); SIMM, Robert, CH-4566 Oekingen (CH); ZURBRUEGG, Andreas, CH-4541 Luterbach (CH); LAETT, Michael, CH-4500 Solothurn (CH); SCHMID, Hardy, 70565 Stuttgart (DE); LIERSCH, Anna, 71701 Schwieberdingen (DE); OLIVERIO, Pasquale, CH-5018 Erlinsbach (CH); TAGSCHERER, Theo, 74405 Gaildorf (DE)
(86) Internationale Anmeldenummer: PCT/EP2013/068215
(87) Internationale Veröffentlichungsnummer: WO 2014/044525

(56) Entgegenhaltungen:
- EP-A1- 0 887 040
- EP-A1- 1 255 069
- WO-A1-02/00087
- WO-A1-2008/003544
- DE-A1- 2 659 141
- DE-A1- 3 312 193
- DE-U1- 20 113 222
- GB-A- 757 408

## Beschreibung

### Stand der Technik

Die DE-A-33 12 193 zeigt ein Absauganschlusssystem für eine tragbare Werkzeugmaschine, das ein Maschinenanschlusselement und ein Saugeranschlusselement umfasst., Das Maschinenanschlusselement und das Saugeranschlusselement sind dazu vorgesehen, miteinander verbunden zu werden.

### Offenbarung der Erfindung

Die Aufgabe der Erfindung wird durch die in den Ansprüchen 1 und 11 genannten Merkmale gelöst.

Es wird vorgeschlagen, dass das Absauganschlusssystem zumindest eine zumindest ein beweglich gelagertes Fixierelement umfassende Fixiereinheit zu einer Fixierung des Maschinenanschlusselements und des Saugeranschlusselements gegen eine Bewegung relativ zueinander in zumindest eine Richtung umfasst. Unter "vorgesehen" soll insbesondere speziell ausgelegt und/oder speziell ausgestattet verstanden werden. Das Maschinenanschlusselement weist insbesondere zu einer Verbindung mit dem Saugeranschlusselement zumindest eine mit dem Saugeranschlusselement korrespondierende Ausgestaltung auf, wie beispielsweise eine mit einer Außenabmessung des Saugeranschlusselements korrespondierende Innenabmessung oder eine mit einer Innenabmessung des Saugeranschlusselements korrespondierende Außenabmessung. Vorzugsweise sind das Maschinenanschlusselement und das Saugeranschlusselement mittels einer Steckverbindung miteinander verbindbar. Besonders bevorzugt ist das Absauganschlusssystem dazu vorgesehen, eine tragbare Werkzeugmaschine mit einer Staubabsaugvorrichtung, insbesondere einem Staubsauger, zu einer Absaugung von während einer Bearbeitung eines Werkstücks mittels der tragbaren Werkzeugmaschine anfallenden Abtragstaub zu verbinden. Der Begriff "Maschinenanschlusselement" soll hier insbesondere ein Element des Absauganschlusssystems definieren, das zu einer Absaugung von während einer Bearbeitung eines Werkstücks mittels der tragbaren Werkzeugmaschine anfallenden Abtragstaub an der tragbaren Werkzeugmaschine angeordnet ist, insbesondere einstückig an ein Werkzeugmaschinengehäuse der tragbaren Werkzeugmaschine angeformt ist oder beweglich am Werkzeugmaschinengehäuse gelagert ist. Das Maschinenanschlusselement ist vorzugsweise als maschinenseitiger Anschlussstutzen ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Der Ausdruck "Saugeranschlusselement" soll hier insbesondere ein Element definieren, das zu einer Absaugung von während einer Bearbeitung eines Werkstücks mittels der tragbaren Werkzeugmaschine anfallenden Abtragstaub an der Staubabsaugvorrichtung, insbesondere an einem Saugschlauch der Staubabsaugvorrichtung, angeordnet ist. Das Saugeranschlusselement ist vorzugsweise als saugerseitiger Anschlussstutzen ausgebildet.

Der Begriff "Fixiereinheit" soll hier insbesondere eine Einheit definieren, die zwei voneinander getrennt ausgebildete Elemente und/oder Einheiten in zumindest einem Zustand mittels einer formschlüssigen und/oder mittels einer kraftschlüssigen Verbindung in zumindest einer Position entlang zumindest einer Richtung relativ zueinander fixiert, insbesondere aneinander fixiert. Besonders bevorzugt ist die Fixiereinheit als Formschlussfixiereinheit ausgebildet. Unter dem Ausdruck "beweglich gelagert" soll hier insbesondere eine Lagerung des Fixierelements an einem weiteren Element verstanden werden, wobei das Fixierelement eine Bewegungsmöglichkeit relativ zum weiteren Element entlang zumindest einer Achse entlang einer Strecke größer als 0,5 mm, bevorzugt größer als 1 mm und besonders bevorzugt größer als 2 mm aufweist und/oder eine Bewegungsmöglichkeit, insbesondere relativ zum weiteren Element, um zumindest eine Achse um einen Winkel größer als 10°, bevorzugt größer als 20° und besonders bevorzugt größer als 30° aufweist. Das Fixierelement ist vorzugsweise getrennt von dem Maschinenanschlusselement und dem Saugeranschlusselement ausgebildet. Das Fixierelement ist hierbei bevorzugt als beweglich gelagertes Rastelement ausgebildet. Es ist jedoch auch denkbar, dass das Fixierelement in einer alternativen Ausgestaltung als Magnetelement ausgebildet ist, das beweglich am Maschinenanschlusselement und/oder am Saugeranschlusselement gelagert ist und nach einer Verbindung des Maschinenanschlusselements und des Saugeranschlusselements in eine Fixierposition bewegbar ist. Hierbei ist es jedoch auch denkbar, dass das als Magnetelement ausgebildete Fixierelement ortsfest am Maschinenanschlusselement und/oder am Saugeranschlusselement angeordnet ist und mittels einer magnetischen Krafteinwirkung das Maschinenanschlusselement und das Saugeranschlusselement relativ zueinander fixiert.

Bevorzugt sind das Maschinenanschlusselement und das Saugeranschlusselement mittels der Fixiereinheit gegen eine Bewegung entlang und entgegen einer Verbindungsbewegungsrichtung des Maschinenanschlusselements und des Saugeranschlusselements fixiert. Unter einer "Verbindungsbewegungsrichtung" soll hier insbesondere eine Bewegungsrichtung des Maschinenanschlusselements und/oder des Saugeranschlusselements verstanden werden, entlang der das Maschinenanschlusselement und/oder das Saugeranschlusselement zu einer Verbindung bewegt werden/wird. Mittels der erfindungsgemäßen Ausgestaltung des Absauganschlusssystems kann vorteilhaft eine sichere Verbindung zwischen dem Maschinenanschlusselement und dem Saugeranschlusselement gewährleistet werden. Zudem kann vorteilhaft ein einfach zu bedienendes Absauganschlusssystem realisiert werden. Somit kann vorteilhaft ein hoher Bedienkomfort für einen Bediener ermöglicht werden.

Des Weiteren wird vorgeschlagen, dass das Fixierelement beweglich am Saugeranschlusselement gelagert ist. Es ist jedoch auch denkbar, dass das Fixierelement beweglich am Maschinenanschlusselement gelagert ist. Mittels der erfindungsgemäßen Ausgestaltung kann vorteilhaft ein bequem zu bedienendes Fixierelement realisiert werden, das komfortabel zu einer Verbindung und/oder zu einer Trennung der Verbindung des Maschinenanschlusselements und des Saugeranschlusselements bedienbar ist.

Ferner wird vorgeschlagen, dass das Fixierelement in einer Aufnahmeausnehmung des Saugeranschlusselements angeordnet ist. Die Aufnahmeausnehmung kann hierbei als Nut oder als durchgehende Materialaussparung gebildet sein. Bei einer Ausgestaltung der Aufnahmeausnehmung als durchgehende Materialaussparung greift das Fixierelement zu einer Fixierung des Maschinenanschlusselements und des Saugeranschlusselements in zumindest einem Zustand durch die Aufnahmeausnehmung hindurch. Somit kann vorteilhaft eine sichere Anordnung des Fixierelements am Saugeranschlusselement erreicht werden.

Zudem wird vorgeschlagen, dass das Fixierelement ringförmig ausgebildet ist. Hierbei ist das Fixierelement als geschlossener Kreisring ausgebildet. Das ringförmige Fixierelement ist vorzugsweise in einer als Nut ausgebildeten Aufnahmeausnehmung oder in einer als durchgehende Materialaussparung ausgebildete Aufnahmeausnehmung beweglich am Saugeranschlusselement gelagert. Es kann vorteilhaft eine kompakte Anordnung des Fixierelements, insbesondere am Saugeranschlusselement, erreicht werden.

Des Weiteren wird vorgeschlagen, dass das Fixierelement zumindest einen Gelenkbereich aufweist. Unter einem "Gelenkbereich" soll hier insbesondere ein Bereich des Fixierelements verstanden werden, der im Vergleich zu direkt an den Bereich angrenzend weiteren Bereichen eine geringere Biegesteifigkeit aufweist und insbesondere biegeweich ausgebildet ist oder als Gelenk ausgebildet ist. Besonders bevorzugt ist der Gelenkbereich als Filmscharnierbereich ausgebildet. Es kann vorteilhaft kostengünstig eine Bewegungsmöglichkeit des Fixierelements zu einer Fixierung bzw. zu einer Lösung einer Fixierung des Maschinenanschlusselements und des Saugeranschlusselements erreicht werden.

Ferner wird vorgeschlagen, dass das Maschinenanschlusselement, betrachtet entlang einer Verbindungsbewegungsrichtung des Maschinenanschlusselements und/oder des Saugeranschlusselements, zumindest zwei voneinander verschiedene Verbindungsbereiche umfasst. Bevorzugt weisen die Verbindungsbereiche entlang einer zumindest im Wesentlichen senkrecht zur Verbindungsbewegungsrichtung verlaufenden Richtung voneinander verschiedene Erstreckungen auf. Somit kann vorteilhaft sichergestellt werden, dass eine Verbindung, insbesondere eine kraftschlüssige Verbindung, des Maschinenanschlusselements mit bereits bestehenden Saugeranschlusselementen, insbesondere mit Gummimuffen von bereits bestehenden Staubabsaugvorrichtungen, erreicht werden kann. Somit kann vorteilhaft eine Kompatibilität des erfindungsgemäßen Maschinenanschlusselements zu bereits bestehenden Staubabsaugvorrichtungen erreicht werden.

Zudem wird vorgeschlagen, dass die Fixiereinheit zumindest ein Federelement umfasst, das ein Bedienelement der Fixiereinheit mit einer Federkraft beaufschlagt. Unter einem "Federelement" soll insbesondere ein makroskopisches Element verstanden werden, das zumindest zwei voneinander beabstandete Enden aufweist, die in einem normalen Betriebszustand entlang einer Bewegungsstrecke relativ zueinander elastisch beweglich sind, wobei die Bewegungsstrecke zumindest größer ist als 0,5 mm, insbesondere größer ist als 1 mm, vorzugsweise größer ist als 2 mm und besonders vorteilhaft größer ist als 3 mm, und das insbesondere eine von einer elastischen Bewegung der Enden relativ zueinander abhängige und vorzugsweise zu der elastischen Bewegung der Enden relativ zueinander proportionale Gegenkraft erzeugt, die der Veränderung entgegenwirkt. Unter einem "makroskopischen Element" soll insbesondere ein Element mit einer Erstreckung von zumindest 1 mm, insbesondere von wenigstens 5 mm und vorzugsweise von mindestens 10 mm verstanden werden. Das Federelement ist bevorzugt als Schraubendruckfeder ausgebildet. Es ist jedoch auch denkbar, dass das Federelement eine andere, einem Fachmann als sinnvoll erscheinende Ausgestaltung aufweist, wie beispielsweise als Schraubenzugfeder, als Schenkelfeder, als Evolutfeder, als Tellerfeder usw. Mittels der erfindungsgemäßen Ausgestaltung kann vorteilhaft eine selbsttätige Bewegung des Bedienelements in zumindest eine Position erreicht werden. Zudem kann vorteilhaft eine sichere Positionierung des Fixierelements über das Bedienelement in zumindest einer Position erreicht werden.

Des Weiteren wird vorgeschlagen, dass die Fixiereinheit zumindest das Bedienelement umfasst, das in zumindest einem Zustand eine Bewegungsmöglichkeit des Fixierelements in eine Löseposition freigibt. Es kann vorteilhaft eine komfortabel zu bedienende Fixiereinheit erreicht werden, die eine konstruktiv einfache Freigabe einer Bewegungsmöglichkeit des Fixierelements ermöglicht.

Ferner wird vorgeschlagen, dass die Fixiereinheit zumindest das Bedienelement umfasst, das ringförmig ausgebildet ist. Hierbei ist das Bedienelement bevorzugt als Bedienhülse ausgebildet. Es ist jedoch auch denkbar, dass das Bedienelement eine andere, einem Fachmann als sinnvoll erscheinende Ausgestaltung aufweist, wie beispielsweise eine Ausgestaltung als Schieberelement, als Druckelement, als Tastenelement usw. Mittels der erfindungsgemäßen Ausgestaltung können vorteilhaft mehrere Fixierelemente der Fixiereinheit mit einem Bedienelement betätigt werden. Ferner kann ein komfortabel von einem Bediener zu fassendes Bedienelement realisiert werden.

Zudem wird vorgeschlagen, dass das Maschinenanschlusselement zumindest eine Fixierelemententkopplungsfläche aufweist, die zumindest in einem Zustand das Fixierelement in eine Löseposition bewegt. Besonders bevorzugt ist die Fixierelemententkopplungsfläche als Schrägfläche ausgebildet, die eine zu einer Längsachse des Maschinenanschlusselements geneigte Ausrichtung aufweist. Vorzugsweise ist das Maschinenanschlusselement rotationssymmetrisch zur Längsachse des Maschinenanschlusselements ausgebildet. Mittels der erfindungsgemäßen Ausgestaltung kann konstruktiv einfach eine Bewegung des Fixierelements in zumindest einem Zustand in eine Löseposition realisiert werden.

Des Weiteren geht die Erfindung aus von einem Maschinenanschlusselement eines erfindungsgemäßen Absauganschlusssystems. Es kann vorteilhaft eine Nachrüstung von bereits bestehenden tragbaren Werkzeugmaschinen mit einem erfindungsgemäßen Maschinenanschlusselement erreicht werden.

Ferner geht die Erfindung aus von einer tragbaren Werkzeugmaschine mit einem erfindungsgemäßen Maschinenanschlusselement. Unter einer "tragbaren Werkzeugmaschine" soll hier insbesondere eine Werkzeugmaschine zu einer Bearbeitung von Werkstücken verstanden werden, die von einem Bediener transportmaschinenlos transportiert werden kann. Die tragbare Werkzeugmaschine weist insbesondere eine Masse auf, die kleiner ist als 40 kg, bevorzugt kleiner ist als 10 kg und besonders bevorzugt kleiner ist als 5 kg. Besonders bevorzugt ist die tragbare Werkzeugmaschine als Schleifmaschine ausgebildet. Es ist jedoch auch denkbar, dass die tragbare Werkzeugmaschine eine andere, einem Fachmann als sinnvoll erscheinende Ausgestaltung aufweist, wie beispielsweise eine Ausgestaltung als Kreissäge, als Hobelmaschine, als Stichsäge, als Bohrmaschine usw. Mittels der erfindungsgemäßen Ausgestaltung kann vorteilhaft eine sichere Verbindung der tragbaren Werkzeugmaschine mit einer Staubabsaugvorrichtung erreicht werden, wodurch eine vorteilhafte Absaugung von während einer Bearbeitung eines Werkstücks mittels der tragbaren Werkzeugmaschine anfallenden Abtragstaub ermöglicht werden kann.

Zudem geht die Erfindung aus von einem Saugeranschlusselement eines erfindungsgemäßen Absauganschlusssystems. Es kann vorteilhaft eine Nachrüstung von bereits bestehenden Staubabsaugvorrichtungen mit einem erfindungsgemäßen Saugeranschlusselement erreicht werden.

Des Weiteren geht die Erfindung aus von einem Werkzeugmaschinenbearbeitungssystem mit einer erfindungsgemäßen tragbaren Werkzeugmaschine und mit einer erfindungsgemäßen Staubabsaugvorrichtung. Mittels der erfindungsgemäßen Ausgestaltung des Werkzeugmaschinenbearbeitungssystems kann vorteilhaft eine Absaugung von Abtragstaub während einer Bearbeitung eines Werkstücks ermöglicht werden. Somit kann vorteilhaft einer gesundheitsschadenden Staubaufwirbelung entgegengewirkt werden.

Das erfindungsgemäße Absauganschlusssystem, das erfindungsgemäße Maschinenanschlusselement, die erfindungsgemäße tragbare Werkzeugmaschine, das erfindungsgemäße Saugeranschlusselement, die erfindungsgemäße Staubabsaugvorrichtung und/oder das erfindungsgemäße Werkzeugmaschinenbearbeitungssystem sollen/soll hierbei nicht auf die oben beschriebene Anwendung und Ausführungsform beschränkt sein. Insbesondere können/kann das erfindungsgemäße Absauganschlusssystem, das erfindungsgemäße Maschinenanschlusselement, die erfindungsgemäße tragbare Werkzeugmaschine, das erfindungsgemäße Saugeranschlusselement, die erfindungsgemäße Staubabsaugvorrichtung und/oder das erfindungsgemäße Werkzeugmaschinenbearbeitungssystem zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein erfindungsgemäßes Werkzeugmaschinenbearbeitungssystem mit einer erfindungsgemäßen tragbaren Werkzeugmaschine und mit einer erfindungsgemäßen Staubabsaugvorrichtung in einer schematischen Darstellung,
- Fig. 2a: eine Detailansicht eines erfindungsgemäßen Maschinenanschlusselements eines erfindungsgemäßen Absauganschlusssystems in einer schematischen Darstellung,
- Fig. 2b: eine Detailansicht einer alternativen Ausgestaltung von Rastausnehmungen des erfindungsgemäßen Maschinenanschlusselements in einer schematischen Darstellung,
- Fig. 3: eine Detailansicht eines erfindungsgemäßen Saugeranschlusselements eines erfindungsgemäßen Absauganschlusssystems in einer schematischen Darstellung,
- Fig. 4: eine Schnittansicht des erfindungsgemäßen Maschinenanschlusselements und des erfindungsgemäßen Saugeranschlusselements in einem miteinander verbundenen Zustand in einer schematischen Darstellung,
- Fig. 5: eine Detailansicht eines alternativen Fixierelements der Fixiereinheit des erfindungsgemäßen Absauganschlusssystems in einer schematischen Darstellung,
- Fig. 6: eine Detailansicht eines weiteren, alternativen Fixierelements der Fixiereinheit des erfindungsgemäßen Absauganschlusssystems in einer schematischen Darstellung,
- Fig. 7: eine Explosionsansicht eines alternativen erfindungsgemäßen Absauganschlusssystems in einer schematischen Darstellung,
- Fig. 8: eine Schnittansicht des alternativen erfindungsgemäßen Absauganschlusssystems in einer schematischen Darstellung,
- Fig. 9: eine weitere Schnittansicht des alternativen erfindungsgemäßen Absauganschlusssystems in einer schematischen Darstellung,
- Fig. 10: eine Detailansicht eines erfindungsgemäßen Saugeranschlusselements des alternativen erfindungsgemäßen Absauganschlusssystems in einer schematischen Darstellung,
- Fig. 11: eine Detailansicht eines weiteren, alternativen erfindungsgemäßen Absauganschlusssystems in einer schematischen Darstellung und
- Fig. 12: eine Detailansicht eines weiteren, alternativen erfindungsgemäßen Absauganschlusssystems in einer schematischen Darstellung.

### Beschreibung der Ausführungsbeispiele

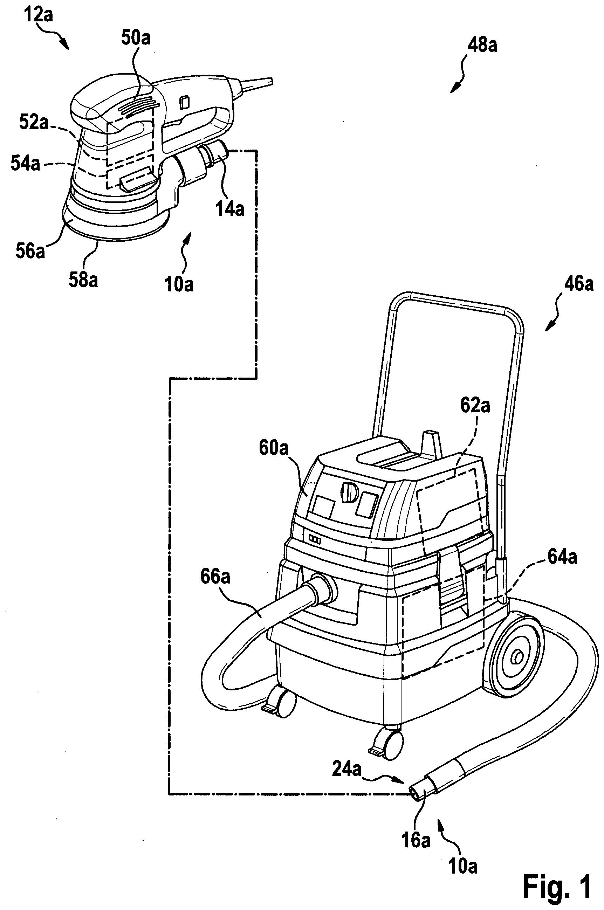

Figur 1 zeigt ein Werkzeugmaschinenbearbeitungssystem 48a, das zumindest eine tragbare Werkzeugmaschine 12a und zumindest eine Staubabsaugvorrichtung 46a umfasst. Die tragbare Werkzeugmaschine 12a ist als Schleifmaschine ausgebildet. Hierbei umfasst die tragbare Werkzeugmaschine 12a ein Werkzeugmaschinengehäuse 50a, das eine Antriebseinheit 52a der tragbaren Werkzeugmaschine 12a und eine Getriebeeinheit 54a der tragbaren Werkzeugmaschine 12a umschließt. Die Antriebseinheit 52a und die Getriebeeinheit 54a sind dazu vorgesehen, ein an einer Werkzeugaufnahme 56a der tragbaren Werkzeugmaschine 12a angeordnetes Bearbeitungswerkzeug 58a rotierend und/oder oszillierend anzutreiben. Das Bearbeitungswerkzeug 58a ist als Schleifblatt ausgebildet. Ferner umfasst die tragbare Werkzeugmaschine 12a im Bereich der Werkzeugaufnahme 56a ein Maschinenanschlusselement 14a eines Absauganschlusssystems 10a. Das Maschinenanschlusselement 14a ist hierbei als Anschlussstutzen ausgebildet, der dazu vorgesehen ist, mit einem korrespondierend zum Anschlussstutzen ausgebildeten Saugeranschlusselement 16a des Absauganschlusssystems 10a verbunden zu werden. Hierbei weist das Maschinenanschlusselement 14a eine zylinderförmige Ausgestaltung auf.

Die Staubabsaugvorrichtung 46a ist hierbei als transportierbarer Staubsauger ausgebildet. Hierbei umfasst die Staubabsaugvorrichtung 46a zumindest ein Gehäuse 60a, das eine Antriebseinheit 62a und einen Auffangbehälter 64a der Staubabsaugvorrichtung 46a umschließt. Ferner umfasst die Staubabsaugvorrichtung 46a zumindest einen Staubabsaugschlauch 66a. Der Staubabsaugschlauch 66a ist strömungstechnisch mit dem Auffangbehälter 64a verbindbar. An dem Staubabsaugschlauch 66a ist zu einer Verbindung der Staubabsaugvorrichtung 46a mit der tragbaren Werkzeugmaschine 12a das Saugeranschlusselement 16a des Absauganschlusssystems 10a angeordnet. Somit bildet das Saugeranschlusselement 16a ein mit dem als Anschlussstutzen ausgebildeten Maschinenanschlusselement 14a korrespondierendes Anschlusselement. Das Maschinenanschlusselement 14a und das Saugeranschlusselement 16a bilden zusammen eine Steckverbindung zu einer Verbindung der tragbaren Werkzeugmaschine 12a und der Staubabsaugvorrichtung 46a zu einer Staubabsaugung von während einer Bearbeitung eines Werkstücks mittels der tragbaren Werkzeugmaschine 12a anfallenden Abtragstaub. Somit umfasst das Absauganschlusssystem 10a für die tragbare Werkzeugmaschine 12a zumindest das Maschinenanschlusselement 14a und zumindest das Saugeranschlusselement 16a die dazu vorgesehen sind, miteinander verbunden zu werden.

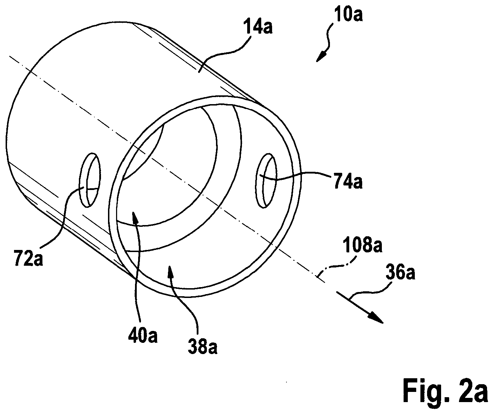

Des Weiteren umfasst das Absauganschlusssystem 10a zumindest eine zumindest ein beweglich gelagertes Fixierelement 18a umfassende Fixiereinheit 24a zu einer Fixierung des Maschinenanschlusselements 14a und des Saugeranschlusselements 16a gegen eine Bewegung relativ zueinander in zumindest eine Richtung (Figuren 2a bis 4). Das Fixierelement 18a ist beweglich am Saugeranschlusselement 16a gelagert. Hierzu umfasst das Saugeranschlusselement 16a zumindest eine Aufnahmeausnehmung 26a. Somit ist das Fixierelement 18a in der Aufnahmeausnehmung 26a des Saugeranschlusselements 16a angeordnet. Die Aufnahmeausnehmung 26a ist als Nut ausgebildet, in der das Fixierelement 18a angeordnet ist. Hierbei erstreckt sich die als Nut ausgebildete Aufnahmeausnehmung 26a kreisringförmig entlang eines Außenumfangs des Saugeranschlusselements 16a. Das Fixierelement 18a ist in einem montierten Zustand, betrachtet entlang einer Längsachse 110a des Saugeranschlusselements 16a, zwischen zwei stegförmigen, die Aufnahmeausnehmung 26a begrenzenden Randbereichen des Saugeranschlusselements 16a angeordnet. In einem miteinander verbundenen Zustand des Maschinenanschlusselements 14a und des Saugeranschlusselements 16a verläuft die Längsachse 110a des Saugeranschlusselements 16a koaxial zu einer Längsachse 108a des Maschinenanschlusselements 14a. Das Fixierelement 18a ist ringförmig ausgebildet.

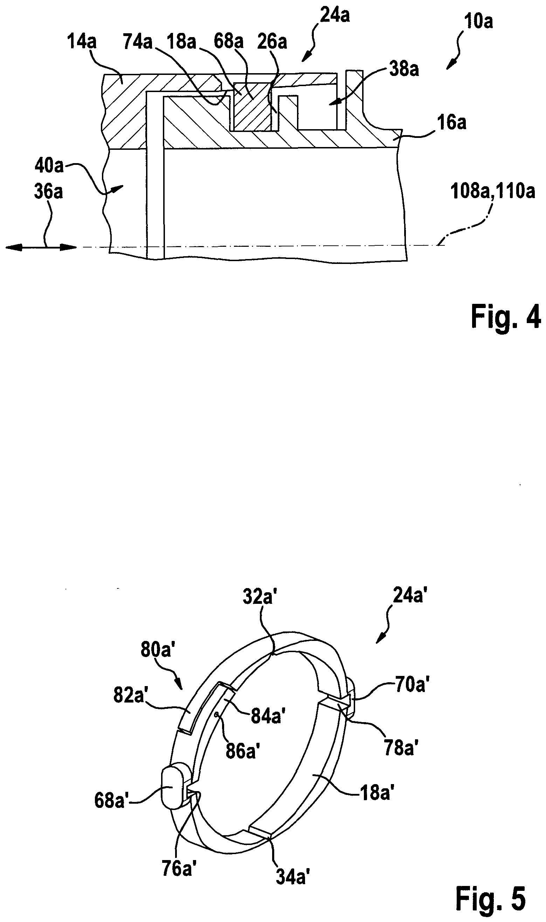

Zu einer Fixierung des Saugeranschlusselements 16a am Maschinenanschlusselement 14a weist das Fixierelement 18a zumindest einen Rastfortsatz 68a auf. Insgesamt umfasst das Fixierelement 18a zwei Rastfortsätze 68a, 70a. Es ist jedoch auch denkbar, dass das Fixierelement 18a eine von zwei verschiedene Anzahl an Rastfortsätzen 68a, 70a umfasst. Die Rastfortsätze 68a, 70a erstrecken sich ausgehend vom Fixierelement 18a radial in eine vom Fixierelement 18a abgewandte Richtung. Zudem sind die Rastfortsätze 68a, 70a um 180° relativ zueinander versetzt am Fixierelement 18a angeordnet. Somit sind die Rastfortsätze 68a, 70a gleichmäßig verteilt am Fixierelement 18a angeordnet (Figur 5). In einem mit dem Maschinenanschlusselement 14a verbundenen Zustand des Saugeranschlusselements 16a greifen die Rastfortsätze 68a, 70a in Rastausnehmungen 72a, 74a des Maschinenanschlusselements 14a ein. Die Rastausnehmungen 72a, 74a weisen hierbei eine mit den Rastfortsätzen 68a, 70a korrespondierende Ausgestaltung auf. Die Rastausnehmungen 72a, 74a sind in einem ersten Verbindungsbereich 38a des Maschinenanschlusselements 14a angeordnet. Hierbei sind die Rastausnehmungen 72a, 74a um 180° relativ zueinander versetzt im ersten Verbindungsbereich 38a angeordnet. Somit sind die Rastausnehmungen 72a, 74a gleichmäßig verteilt im ersten Verbindungsbereich 38a angeordnet (Figur 2a). Ferner weisen die Rastausnehmungen 72a, 74a eine ovale Ausgestaltung auf. Insgesamt weist das Maschinenanschlusselement 14a zwei Verbindungsbereiche 38a, 40a auf. Das Maschinenanschlusselement 14a umfasst, betrachtet entlang der Verbindungsbewegungsrichtung 36a des Maschinenanschlusselements 14a und/oder des Saugeranschlusselements 16a bzw. entlang der Längsachse 108a des Maschinenanschlusselements 14a, zumindest zwei voneinander verschiedene Verbindungsbereiche 38a, 40a. Hierdurch wird eine Verbindung des Maschinenanschlusselements 14a mit bereits bestehenden Anschlusselementen von bereits bestehenden Staubabsaugvorrichtungen (hier nicht näher dargestellt) gewährleistet. Die Verbindungsbereiche 38a, 40a weisen voneinander verschieden ausgebildete Innendurchmesser auf (Figur 2a).

Zu einer Verbindung des Maschinenanschlusselements 14a und des Saugeranschlusselements 16a betätigt ein Bediener die Rastfortsätze 68a, 70a in Richtung des Saugeranschlusselements 16a. Hierdurch wird das Fixierelement 18a in der Aufnahmeausnehmung 26a elastisch verformt. Nach einem Einführen des Saugeranschlusselements 16a in das Maschinenanschlusselement 14a entlang der Verbindungsbewegungsrichtung 36a bewegen sich die Rastfortsätze 68a, 70a infolge einer durch die elastische Verformung des Fixierelements 18a hervorgerufene Spannkraft im Fixierelement 18a selbsttätig in die Rastausnehmungen 72a, 74a sobald die Rastfortsätze 68a, 70a mit den Rastausnehmungen 72a, 74a fluchten. Das Maschinenanschlusselement 14a und das Saugeranschlusselement 16a sind somit entlang der Verbindungsbewegungsrichtung 36a relativ zueinander fixiert. Eine Rotation des Maschinenanschlusselements 14a relativ zum Saugeranschlusselement 16a wird hierbei durch die bewegliche Anordnung des Fixierelements 18a in der Aufnahmeausnehmung 26a weiterhin gewährleistet.

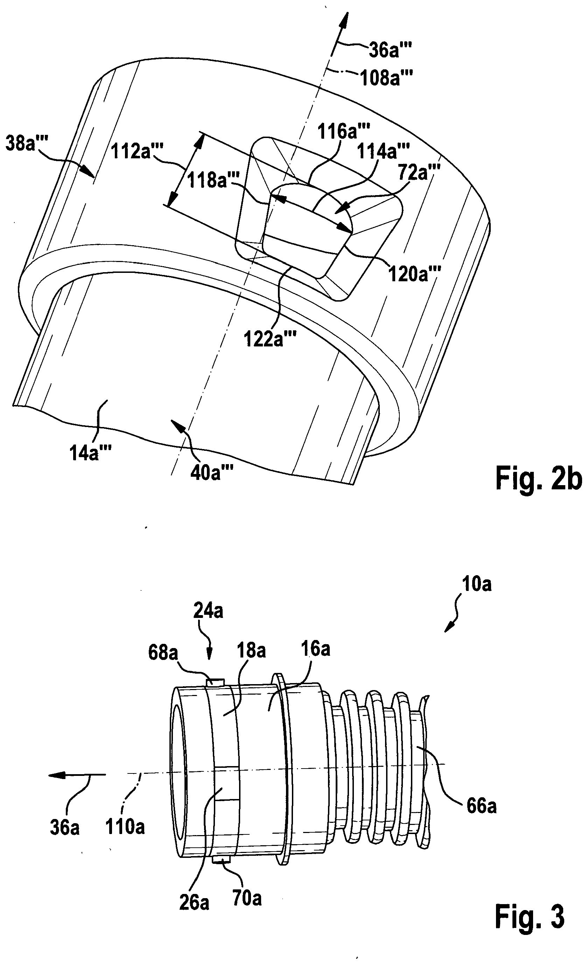

In Figur 2b ist eine zu der in Figur 2a gezeigten Ausführung der Rastausnehmungen 72a, 74a alternative Ausgestaltung von Rastausnehmungen 72a'" dargestellt, wobei lediglich eine der alternativen Rastausnehmungen 72a'" in Figur 2b gezeigt wird. Zur Unterscheidung der Ausführungsbeispiele aus den Figuren 2a und 2b sind den Bezugszeichen des in Figur 2b gezeigten Ausführungsbeispiels drei Apostrophen hinzugefügt worden. Die Rastausnehmungen 72a'" sind analog zu den in Figur 2a gezeigten Rastausnehmungen 72a, 74a an einem Maschinenanschlusselement 14a'" angeordnet. Somit unterscheiden sich die alternativen Rastausnehmungen 72a'" aus Figur 2b im Wesentlichen in einer geometrischen Form von den Rastausnehmungen 72a, 74a aus Figur 2a. Hierbei weisen die Rastausnehmungen 72a"', betrachtet entlang einer Verbindungsbewegungsrichtung 36a'" des Maschinenanschlusselements 14a'" bzw. entlang einer Längsachse 108a'" des Maschinenanschlusselements 14a"', jeweils eine maximale Längserstreckung 112a'" auf, die größer ist als 6 mm. Bevorzugt weisen die Rastausnehmungen 72a'", betrachtet entlang der Verbindungsbewegungsrichtung 36a'" des Maschinenanschlusselements 14a'" bzw. entlang der Längsachse 108a'" des Maschinenanschlusselements 14a'", jeweils eine maximale Längserstreckung 112a'" auf, die größer ist als 9 mm. Somit kann eine Anpassung der Rastausnehmungen 72a'" an eine Fingerform eines Bedieners erreicht werden. Zudem weisen die Rastausnehmungen 72a'" ein Verhältnis der entlang der Verbindungsbewegungsrichtung 36a'" verlaufenden maximalen Längserstreckung 112a'" und einer entlang einer zumindest im Wesentlichen senkrecht zur Verbindungsbewegungsrichtung 36a'" verlaufenden maximalen Breitenerstreckung 114a'" von 1:1 bis 1:2 auf.

Die Rastausnehmungen 72a"' werden von jeweils vier die Rastausnehmungen . 72a'" begrenzenden Seitenwandbereiche 116a"', 118a"', 120a'", 122a'" des Maschinenanschlusselements 14a'" begrenzt. Hierbei verläuft ein erster Seitenwandbereich 116a'", betrachtet entlang einer zumindest im Wesentlichen quer zur Verbindungsbewegungsrichtung 36a'" verlaufenden Richtung, bogenförmig. Der bogenförmige erste Seitenwandbereich 116a'" weist einen mit einem Randbereich eines in Figur 3 gezeigten Rastfortsatzes 68a, 70a korrespondierenden Verlauf auf. Zwei direkt an den bogenförmig verlaufenden ersten Seitenwandbereich 116a'"angrenzende weitere Seitenwandbereiche 118a'", 120a'" verlaufen, betrachtet entlang der Verbindungsbewegungsrichtung 36a"', abgewinkelt zueinander und abgewinkelt zur Verbindungsbewegungsrichtung 36a"'. Die weiteren Seitenwandbereiche 118a"', 120a'" grenzen hierbei an zwei sich abgewandten Enden des bogenförmigen ersten Seitenwandbereichs 116a'" direkt an den bogenförmigen ersten Seitenwandbereich 116a'" an. Zudem verläuft ein die zwei zueinander abgewinkelt verlaufenden weiteren Seitenwandbereiche 118a'", 120a'" verbindender Seitenwandbereich 122a'" zumindest im Wesentlichen senkrecht zur Verbindungsbewegungsrichtung 36a"'. Somit werden die Rastausnehmungen 72a'" jeweils von insgesamt vier Seitenwandbereichen 116a"', 118a"', 120a"', 122a'" des Maschinenanschlusselements 14a'" begrenzt, die entlang einer Umfangsrichtung einen in sich geschlossenen Verlauf bilden, der die jeweilige Rastausnehmung 72a'" begrenzt. Die Rastausnehmungen 72a'" können hierbei in einer Vertiefung einer Außenwand des Maschinenanschlusselements 14a'" in Richtung einer Innenwand des Maschinenanschlusselements 14a'" relativ zur Außenwand zurückversetzt am Maschinenanschlusselement 14a'" angeordnet sein und mit der Innenwand des Maschinenanschlusselements 14a'" abschließen oder die Rastausnehmungen 72a'" erstrecken sich bündig ausgehend von der Außenwand in Richtung der Innenwand, bis die Rastausnehmungen 72a'" bündig mit der Innenwand abschließen, wie dies bei den Rastausnehmungen 72a, 74 in Figur 2a dargestellt ist.

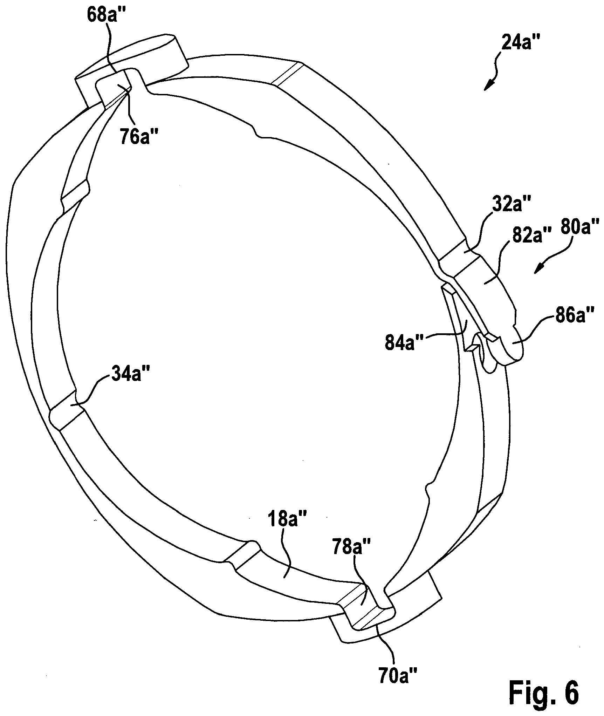

In Figuren 6 bis 13 sind weitere alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis d hinzugefügt. Die nachfolgende Beschreibung beschränkt sich im Wesentlichen auf die Unterschiede zu dem in den Figuren 1 bis 5 beschriebenen ersten Ausführungsbeispiel, wobei bezüglich gleichbleibender Bauteile, Merkmale und Funktionen auf die Beschreibung des ersten Ausführungsbeispiels in den Figuren 1 bis 5 verwiesen werden kann.

Figur 6a zeigt ein zum Fixierelement 18a alternativ ausgebildetes Fixierelement 18a' einer alternativen Fixiereinheit 24a'. Das Fixierelement 18a' ist hierbei zumindest im Wesentlichen analog zum Fixierelement 18a aus den Figuren 1 bis 5 an dem Saugeranschlusselement 16a anordenbar. Somit werden hier lediglich die Unterschiede des Fixierelements 18a' zum Fixierelement 18a aus den Figuren 1 bis 5 näher beschrieben. Das Fixierelement 18a' weist in einem montierten Zustand eine kreisringförmige Ausgestaltung auf. Somit erstreckt sich das Fixierelement 18a' in einem montierten Zustand entlang eines Winkelbereichs von 360°. Das Fixierelement 18a' umfasst zumindest einen Gelenkbereich 32a'. Der Gelenkbereich 32a' ist, betrachtet entlang einer Umfangsrichtung des Fixierelements 18a' zwischen Rastfortsätzen 68a', 70a' angeordnet. Insgesamt weist das Fixierelement 18a' zwei Gelenkbereiche 32a', 34a' auf. Die Gelenkbereiche 32a', 34a' sind als Filmscharnierbereiche ausgebildet. Hierbei sind die Gelenkbereiche 32a', 34a', betrachtet entlang der Umfangsrichtung des Fixierelements 18a', jeweils zwischen den Rastfortsätzen 68a', 70a' angeordnet. Somit folgt entlang der Umfangsrichtung des Fixierelements 18a' jeweils ein Gelenkbereich 32a', 34a' auf einen der Rastfortsätze 68a', 70a'.

Ferner umfasst das Fixierelement 18a' zwei weitere Gelenkbereiche 76a', 78a'. Die weiteren Gelenkbereiche 76a', 78a' sind als Filmscharnierbereich ausgebildet. Hierbei sind die weiteren Gelenkbereiche 76a', 78a' an den Rastfortsätzen 68a', 70a' angeordnet. Somit sind entlang der Umfangsrichtung des Fixierelements 18a' entlang eines gesamten Umfangs des Fixierelements 18a' im Wechsel ein biegesteifer Bereich und ein biegeweicher Bereich direkt aufeinanderfolgend angeordnet. Hierdurch wird durch eine Betätigung einer der Rastfortsätze 68a', 70a' der andere der Rastfortsätze 68a', 70a' mit bewegt. Es muss somit lediglich einer der Rastfortsätze 68a', 70a' zu einer Verbindung bzw. zu einer Lösung der Verbindung des Maschinenanschlusselements 14a und des Saugeranschlusselements 16a betätigt werden.

Zudem weist das Fixierelement 18a' einen Montagebereich 80a' auf. Der Montagebereich 80a' umfasst zwei voneinander getrennt ausgebildete Montageschenkel 82a', 84a', die mittels eines Befestigungselements 86a' der Fixiereinheit 24a' aneinander befestigbar sind. Das Befestigungselement 86a' ist als Befestigungszapfen ausgebildet, der einstückig an einen der Montageschenkel 82a', 84a' angeformt ist. Das Befestigungselement 86a' ist dazu vorgesehen, die Montageschenkel 82a', 84a' entlang einer Axialrichtung, um die die Umfangsrichtung verläuft miteinander zu verbinden. Hierbei wird das Befestigungselement 86a' zusammen mit dem Montageschenkel 82a', an dem das Befestigungselement 86a' angeformt ist, entlang der Axialrichtung bewegt, bis das Befestigungselement 86a' in einer Ausnehmung des entkoppelt von dem Befestigungselement 86a' ausgebildeten Montageschenkels 84a' angeordnet ist und die Montageschenkel 82a', 84a' aneinander befestigt sind. Es ist jedoch auch denkbar, dass das Befestigungselement 86a' eine andere, einem Fachmann als sinnvoll erscheinende Ausgestaltung aufweist, wie beispielsweise eine Ausgestaltung als Befestigungsrastelement, als Befestigungsklammerelement usw.

Figur 6 zeigt ein zum Befestigungselement 86a' aus Figur 5 alternatives Befestigungselement 86a" eines Fixierelements 18a" einer alternativen Fixiereinheit 24a".Das Fixierelement 18a" ist hierbei zumindest im Wesentlichen analog zum Fixierelement 18a' aus Figur 5 ausgebildet. Somit werden hier lediglich die Unterschiede zwischen dem Befestigungselement 86a' aus Figur 5 und dem alternativen Befestigungselement 86a" näher beschrieben. Das Befestigungselement 86a" ist als Radialformschlussfortsatz ausgebildet, der einstückig an einen Montageschenkel 82a", 84a" des Fixierelements 18" angeformt ist. Das Befestigungselement 86a" ist dazu vorgesehen, die Montageschenkel 82a", 84a" entlang einer zumindest im Wesentlichen senkrecht zu einer Umfangsrichtung des Fixierelements 18a" verlaufenden Radialrichtung miteinander zu verbinden. Die Radialrichtung verläuft zudem im Wesentlichen senkrecht zu einer Axialrichtung, um die die Umfangsrichtung verläuft. Zu einer Verbindung der Montageschenkel 82a", 84a" wird das Befestigungselement 86a" zusammen mit dem Montageschenkel 82a", an dem das Befestigungselement 86a" angeformt ist, entlang der Radialrichtung bewegt, bis das Befestigungselement 86a" in einer Ausnehmung des entkoppelt von dem Befestigungselement 86a" ausgebildeten Montageschenkel 84a"angeordnet ist und die Montageschenkel 82a", 84a" aneinander befestigt sind.

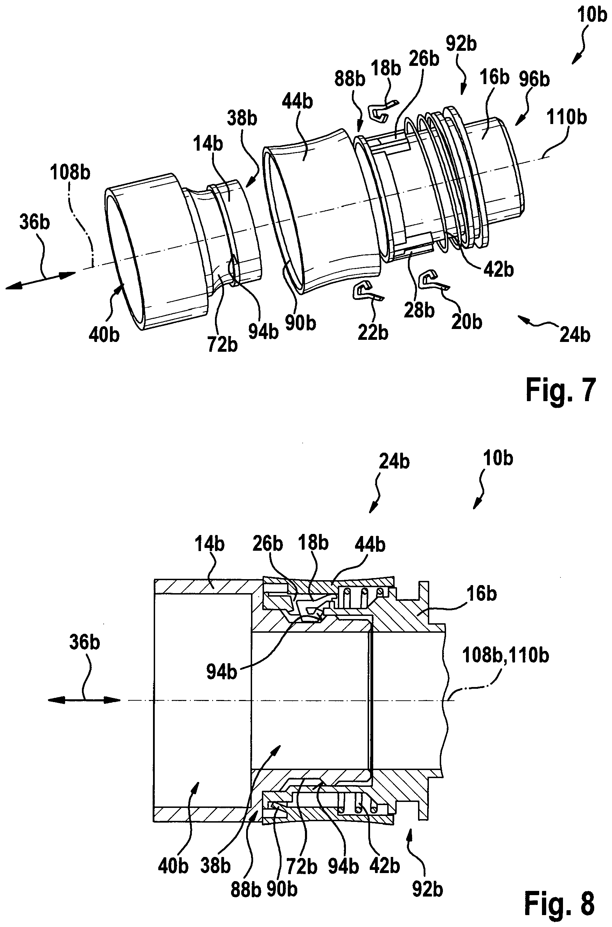

Figur 7 zeigt ein alternatives Absauganschlusssystem 10b. Das Absauganschlusssystem 10b ist alternativ zu dem in den Figuren 1 bis 5 beschriebenen Absauganschlusssystem 10a an der in den Figuren 1 bis 5 beschriebenen, tragbaren Werkzeugmaschine 12a und an der in den Figuren 1 bis 5 beschriebenen Staubabsaugvorrichtung 46a anordenbar. Das Absauganschlusssystem 10b für tragbare Werkzeugmaschinen (hier nicht näher dargestellt) umfasst zumindest ein Maschinenanschlusselement 14b und zumindest ein Saugeranschlusselement 16b, die dazu vorgesehen sind, miteinander verbunden zu werden. Ferner umfasst das Absauganschlusssystem 10b zumindest eine zumindest ein beweglich gelagertes Fixierelement 18b, 20b, 22b umfassende Fixiereinheit 24b zu einer Fixierung des Maschinenanschlusselements 14b und des Saugeranschlusselements 16b gegen eine Bewegung relativ zueinander in zumindest eine Richtung. Insgesamt umfasst die Fixiereinheit 24b drei beweglich gelagerte Fixierelemente 18b, 20b, 22b. Es ist jedoch auch denkbar, dass die Fixiereinheit 24b eine von drei abweichende Anzahl an Fixierelementen 18b, 20b, 22b umfasst.

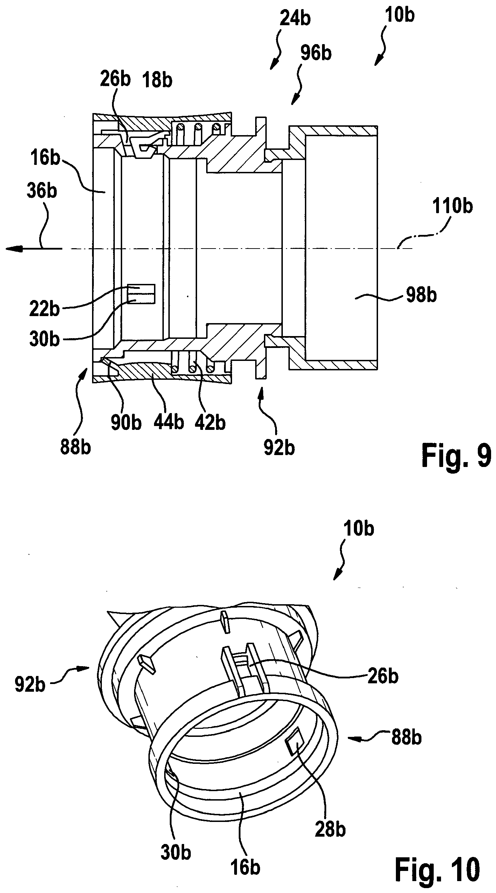

Die Fixierelemente 18b, 20b, 22b sind beweglich am Saugeranschlusselement 16b gelagert. Hierbei sind die Fixierelemente 18b, 20b, 22b jeweils in einer Aufnahmeausnehmung 26b, 28b, 30b des Saugeranschlusselements 16b angeordnet (Figuren 7 und 10). Die Fixierelemente 18b, 20b, 22b durchgreifen die Aufnahmeausnehmung 26b, 28b, 30b zumindest teilweise in einem fixierten Zustand des Maschinenanschlusselements 14b und des Saugeranschlusselements 16b. Ferner sind die Fixierelemente 18b, 20b, 22b als Rasthaken ausgebildet. Hierbei rasten die Fixierelemente 18b, 20b, 22b in einem fixierten Zustand des Maschinenanschlusselements 14b und des Saugeranschlusselements 16b in einer Rastausnehmung 72b des Maschinenanschlusselements 14b ein (Figur 8). Die Rastausnehmung 72b des Maschinenanschlusselements 14b ist als ringförmige Nut ausgebildet. Somit hintergreifen die Fixierelemente 18b, 20b, 22b in einem fixierten Zustand des Maschinenanschlusselements 14b und des Saugeranschlusselements 16b einen die als Nut ausgebildete Rastausnehmung 72b begrenzenden, stegförmigen Randberiech des Maschinenanschlusselements 14b. Es ist jedoch auch denkbar, dass die Rastausnehmung 72b eine andere, einem Fachmann als sinnvoll erscheinende Ausgestaltung aufweist. Infolge der Ausgestaltung der Rastausnehmung 72b als ringförmige Nut wird in einem fixierten Zustand des Maschinenanschlusselements 14b und des Saugeranschlusselements 16b eine Rotation des Maschinenanschlusselements 14b relativ zum Saugeranschlusselement 16b gewährleistet. Das Maschinenanschlusselement 14b umfasst, betrachtet entlang einer Verbindungsbewegungsrichtung 36b des Maschinenanschlusselements 14b und/oder des Saugeranschlusselements 16b, zumindest zwei voneinander verschiedene Verbindungsbereiche 38b, 40b. Die Rastausnehmung 72b des Maschinenanschlusselements 14b ist an einem Außenumfang einer der Verbindungsbereiche 38b, 40b angeordnet.

Des Weiteren umfasst die Fixiereinheit 24b zumindest ein Federelement 42b, das ein Bedienelement 44b der Fixiereinheit 24b mit einer Federkraft beaufschlagt. Das Federelement 42b ist als Schraubendruckfeder ausgebildet. Zu einer Beaufschlagung des Bedienelements 44b mit einer Federkraft stützt sich das Federelement 42b mit einem Ende am Saugeranschlusselement 16b und mit einem anderen Ende stützt sich das Federelement 42b am Bedienelement 44b ab. Das Bedienelement 44b ist ringförmig ausgebildet. Hierbei ist das Bedienelement 44b als Bedienhülse ausgebildet. Somit erstreckt sich das Bedienelement 44b entlang einer Umfangsrichtung des Saugeranschlusselements 16b entlang eines Winkelbereichs von 360° um das Saugeranschlusselement 16b. Zu einer Begrenzung einer Bewegung des Bedienelements 44b infolge einer Federkraft des Federelements 42 weist das Saugeranschlusselement 16b einen stegförmigen Anschlagbereich 88b auf. Das Bedienelement 44b weist einen Anschlagfortsatz 90b auf, der zu einer Begrenzung einer Bewegung des Bedienelements 44b in zumindest eine Richtung in zumindest einem Zustand mit dem Anschlagbereich 88b zusammenwirkt (Figur 8). Das Saugeranschlusselement 16b weist ferner einen weiteren Anschlagbereich 92b auf, der dazu vorgesehen ist, mit dem Bedienelement 44b zu einer Begrenzung einer Bewegung des Bedienelements 44b bei einer Bewegung des Bedienelements 44b entgegen einer Federkraft des Federelements 42b zusammenzuwirken. Der weitere Anschlagbereich 92b ist stegförmig ausgebildet und parallel versetzt zum Anschlagbereich 88b am Saugeranschlusselement 16b angeordnet.

Zu einer Lösung einer Fixierung des Maschinenanschlusselements 14b und des Saugeranschlusselements 16b umfasst die Fixiereinheit 24b zumindest das Bedienelement 44b, das in zumindest einem Zustand eine Bewegungsmöglichkeit der Fixierelemente 18b, 20b, 22b in eine Löseposition freigibt. Zu einer Freigabe einer Bewegungsmöglichkeit der Fixierelemente 18b, 20b, 22b in eine Löseposition wird das Bedienelement 44b entgegen einer Federkraft des Federelements 42b, bis zu einem Anschlagen des Bedienelements 44b am weiteren Anschlagbereich 92b bewegt. Hierdurch wird ein Freiraum zwischen dem Bedienelement 44b und den Fixierelementen 18b, 20b, 22b freigegeben. Das Maschinenanschlusselement 14b weist zumindest eine Fixierelemententkopplungsfläche 94b auf, die zumindest in einem Zustand die Fixierelemente 18b, 20b, 22b in eine Löseposition bewegt (Figur 8). Die Fixierelemententkopplungsfläche 94b ist als Schrägfläche ausgebildet, die an einem die Rastausnehmung 72b begrenzenden Randbereich angeformt ist. Somit werden die Fixierelemente 18b, 20b, 22b infolge eines Abziehens des Saugeranschlusselements 16b von dem Maschinenanschlusselement 14b mittels eines Zusammenwirkens von mit der Fixierelemententkopplungsfläche 94b korrespondierenden Schrägflächen der Fixierelemente 18b, 20b, 22b in eine Löseposition bewegt.

Des Weiteren umfasst das Saugeranschlusselement 16b einen Kopplungsbereich 96b zu einer Kopplung eines Adapterelements 98b des Absauganschlusssystems 10b (Figur 9). Das Adapterelement 98b ist dazu vorgesehen, eine Kopplung des Saugeranschlusselements 16b mit Staubabsaugschläuchen einer Staubabsaugvorrichtung (hier nicht näher dargestellt) zu ermöglichen. Hierbei können verschieden ausgebildete Adapterelemente 98b am Kopplungsbereich 96b angeordnet werden, die eine Kopplung des Saugeranschlusselements 16b mit verschiedenen Staubabsaugschläuchen (hier nicht näher dargestellt) ermöglichen. Es ist jedoch auch denkbar, dass das Saugeranschlusselement 16b entkoppelt von dem Adapterelement 98b an einem Staubabsaugschlauch angeordnet ist. Der Kopplungsbereich 96b ist hierbei als Formschluss- und/oder als Kraftschlusskopplungsbereich ausgebildet.

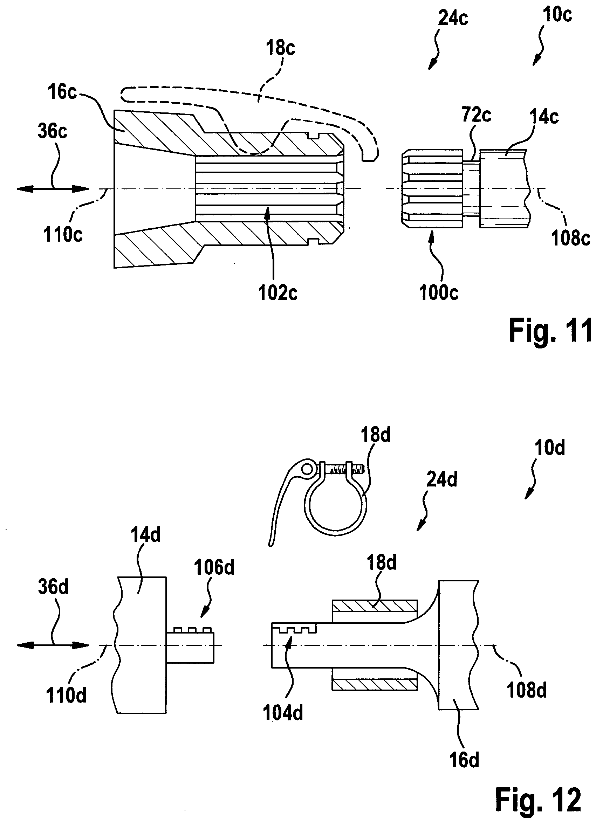

Figur 11 zeigt ein weiteres, alternatives Absauganschlusssystem 10c. Das Absauganschlusssystem 10c ist alternativ zu dem in den Figuren 1 bis 5 beschriebenen Absauganschlusssystem 10a an der in den Figuren 1 bis 5 beschriebenen, tragbaren Werkzeugmaschine 12a und an der in den Figuren 1 bis 5 beschriebenen Staubabsaugvorrichtung 46a anordenbar. Das Absauganschlusssystem 10c für tragbare Werkzeugmaschinen (hier nicht näher dargestellt) umfasst zumindest ein Maschinenanschlusselement 14c und zumindest ein Saugeranschlusselement 16c, die dazu vorgesehen sind, miteinander verbunden zu werden. Ferner umfasst das Absauganschlusssystem 10c zumindest eine zumindest ein beweglich gelagertes Fixierelement 18c umfassende Fixiereinheit 24c zu einer Fixierung des Maschinenanschlusselements 14c und des Saugeranschlusselements 16c gegen eine Bewegung relativ zueinander in zumindest eine Richtung. Das Fixierelement 18c ist beweglich am Saugeranschlusselement 16c gelagert. Hierbei ist das Fixierelement 18c als Rasthebel ausgebildet.

Das Maschinenanschlusselement 14c weist einen Formschlussverbindungsbereich 100c auf. Der Formschlussverbindungsbereich 100c des Maschinenanschlusselements 14c ist an einem Außenumfang des Maschinenanschlusselements 14c angeordnet. Hierbei ist der Formschlussverbindungsbereich 100c des Maschinenanschlusselements 14c als Keilwellenverbindungsbereich ausgebildet. Das Saugeranschlusselement 16c umfasst einen zum Formschlussverbindungsbereich 100c des Maschinenanschlusselements 14c korrespondierenden Formschlussverbindungsbereich 102c. Der Formschlussverbindungsbereich 102c des Saugeranschlusselements 16c ist somit als Keilwellenverbindungsbereich ausgebildet. Hierbei ist der Formschlussverbindungsbereich 102c des Saugeranschlusselements 16c an einem Innenumfang des Saugeranschlusselements 16c angeordnet. Es ist jedoch auch denkbar, dass der Formschlussverbindungsbereich 100c des Maschinenanschlusselements 14c und der Formschlussverbindungsbereich 102c des Saugeranschlusselements 16c eine andere, einem Fachmann als sinnvoll erscheinende Ausgestaltung aufweisen, wie beispielsweise eine Ausgestaltung als Passfederverbindungsbereich usw.

Alternativ könnten das Maschinenanschlusselement 14c und das Saugeranschlusselement 16c als Kugelgelenkelemente ausgebildet sein, die ineinander einführbar sind und mittels eines als Spannband beweglich am Saugeranschlusselement 16c gelagerten Fixierelements 18c aneinander fixiert sein. Hierbei ist es denkbar, dass das Spannband lediglich soweit angezogen wird, das eine Bewegung des Maschinenanschlusselements 14c und des Saugeranschlusselements 16c in einem verbundenen Zustand möglich ist, jedoch ein Lösen einer Verbindung zwischen dem Maschinenanschlusselement 14c und dem Saugeranschlusselement 16c verhindert wird.

Figur 12 zeigt ein weiteres, alternatives Absauganschlusssystem 10d. Das Absauganschlusssystem 10d ist alternativ zu dem in den Figuren 1 bis 5 beschriebenen Absauganschlusssystem 10a an der in den Figuren 1 bis 5 beschriebenen, tragbaren Werkzeugmaschine 12a und an der in den Figuren 1 bis 5 beschriebenen Staubabsaugvorrichtung 46a anordenbar. Das Absauganschlusssystem 10d für tragbare Werkzeugmaschinen (hier nicht näher dargestellt) umfasst zumindest ein Maschinenanschlusselement 14d und zumindest ein Saugeranschlusselement 16d, die dazu vorgesehen sind, miteinander verbunden zu werden. Ferner umfasst das Absauganschlusssystem 10d zumindest eine zumindest ein beweglich gelagertes Fixierelement 18d umfassende Fixiereinheit 24d zu einer Fixierung des Maschinenanschlusselements 14d und des Saugeranschlusselements 16d gegen eine Bewegung relativ zueinander in zumindest eine Richtung. Das Fixierelement 18d ist beweglich am Saugeranschlusselement 16d gelagert. Hierbei ist das Fixierelement 18d als Spannband ausgebildet.

Das Saugeranschlusselement 16d ist aus einem elastischen Kunststoff gebildet, der auf das Maschinenanschlusselement 14d aufschiebbar bzw. über das Maschinenanschlusselement 14d stülpbar ist. Ferner umfasst das Saugeranschlusselement 16d an einem Innenumfang eine entlang einer Längsachse des Saugeranschlusselements 16d verlaufende Verzahnung 104d. Das Maschinenanschlusselement 14d umfasst an einem Außenumfang des Maschinenanschlusselements 14d eine mit der Verzahnung 104d des Saugeranschlusselements 16d korrespondierende und entlang einer Längsachse des Maschinenanschlusselements 14d verlaufende Verzahnung 106d. Nach einer Verbindung des Maschinenanschlusselements 14d und des Saugeranschlusselements 16d wird das als Spannband ausgebildete Fixierelement 18d zu einer Fixierung des Maschinenanschlusselements 14d und des Saugeranschlusselements 16d angezogen.

## Patentansprüche

1. Absauganschlusssystem für tragbare Werkzeugmaschinen (12a), das dazu vorgesehen ist, eine tragbare Werkzeugmaschine (12a) und eine Staubabsaugvorrichtung (46a) zu einer Staubabsaugung von während einer Bearbeitung eines Werkstücks mittels der tragbaren Werkzeugmaschine (12a) anfallenden Abtragstaub zu verbinden, mit zumindest einem Maschinenanschlusselement (14a; 14b; 14c; 14d), mit zumindest einem Saugeranschlusselement (16a; 16b; 16c, 16d), das als saugerseitiger Anschlussstutzen ausgebildet ist, wobei das Maschinenanschlusselement (14a; 14b; 14c; 14d) und das Saugeranschlusselement (16a; 16b; 16c, 16d) dazu vorgesehen sind, miteinander verbunden zu werden, und mit zumindest einer zumindest ein beweglich gelagertes Fixierelement (18a; 18a'; 18b, 20b, 22b; 18c; 18d) umfassende Fixiereinheit (24a; 24a'; 24b; 24c; 24d) zu einer Fixierung des Maschinenanschlusselements (14a; 14b; 14c; 14d) und des Saugeranschlusselements (16a; 16b; 16c, 16d) gegen eine Bewegung relativ zueinander in zumindest eine Richtung, **dadurch gekennzeichnet, dass** das Maschinenanschlusselement (14a; 14b; 14c; 14d) als maschinenseitiger Anschlussstutzen ausgebildet ist und dass das Fixierelement (18a'; 18a'; 18b, 20b, 22b; 18c; 18d) als geschlossener Kreisring ausgebildet ist.

2. Absauganschlusssystem nach Anspruch 1, **dadurch gekennzeichnet, dass** das Fixierelement (18a; 18a'; 18b, 20b, 22b; 18c; 18d) beweglich am Saugeranschlusselement (16a; 16b; 16c, 16d) gelagert ist.

3. Absauganschlusssystem nach einem der vorhergehenden Ansprüche, **dadurch gekennzeichnet, dass** das Fixierelement (18a; 18a'; 18b, 20b, 22b) in einer Aufnahmeausnehmung (26a; 26b, 28b, 30b) des Saugeranschlusselements (16a; 16b) angeordnet ist.

4. Absauganschlusssystem nach einem der vorhergehenden Ansprüche, **dadurch gekennzeichnet, dass** das Fixierelement (18a; 18a') ringförmig ausgebildet ist.

5. Absauganschlusssystem nach einem der vorhergehenden Ansprüche, **dadurch gekennzeichnet, dass** das Fixierelement (18a') zumindest einen Gelenkbereich (32a', 34a') aufweist.

6. Absauganschlusssystem nach einem der vorhergehenden Ansprüche, **dadurch gekennzeichnet, dass** das Maschinenanschlusselement (14a; 14b), betrachtet entlang einer Verbindungsbewegungsrichtung (36a; 36b) des Maschinenanschlusselements (14a; 14b), zumindest zwei voneinander verschiedene Verbindungsbereiche (38a, 40a; 38b, 40b) umfasst.

7. Absauganschlusssystem nach einem der vorhergehenden Ansprüche, **dadurch gekennzeichnet, dass** die Fixiereinheit (24b) zumindest ein Federelement (42b) umfasst, das ein Bedienelement (44b) der Fixiereinheit (24b) mit einer Federkraft beaufschlagt.

8. Absauganschlusssystem nach einem der vorhergehenden Ansprüche, **dadurch gekennzeichnet, dass** die Fixiereinheit (24b) zumindest ein Bedienelement (44b) umfasst, das in zumindest einem Zustand eine Bewegungsmöglichkeit des Fixierelements (18b, 20b, 22b) in eine Löseposition freigibt.

9. Absauganschlusssystem nach einem der vorhergehenden Ansprüche, **dadurch gekennzeichnet, dass** die Fixiereinheit (24b) zumindest ein Bedienelement (44b) umfasst, das ringförmig ausgebildet ist.

10. Absauganschlusssystem nach einem der vorhergehenden Ansprüche, **dadurch gekennzeichnet, dass** das Maschinenanschlusselement (14b) zumindest eine Fixierelemententkopplungsfläche (94b) aufweist, die zumindest in einem Zustand das Fixierelement (18b, 20b, 24b) in eine Löseposition bewegt.

11. Werkzeugmaschinenbearbeitungssystem mit zumindest einem Absauganschlusssystems nach einem der vorhergehenden Ansprüche, mit zumindest einer tragbaren Werkzeugmaschine, die zumindest das Maschinenanschlusselement des Absauganschlusssystems umfasst, und mit zumindest einer Staubabsaugvorrichtung, insbesondere Staubsauger, die zumindest das Saugeranschlusselement des Absauganschlusssystems umfasst.

## Claims

1. Extraction connection system for portable machine tools (12a), which is provided to connect a portable machine tool (12a) and a dust extraction device (46a) for extracting abrasion dust arising during a machining of a workpiece by means of the portable machine tool (12a), comprising at least one tool connection element (14a; 14b; 14c; 14d), comprising at least one suction apparatus connection element (16a; 16b; 16c, 16d) which is in the form of a suction-apparatus-side connecting branch, wherein the tool connection element (14a; 14b; 14c; 14d) and the suction apparatus connection element (16a; 16b; 16c, 16d) are provided to be connected to each other, and comprising at least one fixing unit (24a; 24a'; 24b; 24c; 24d), which comprises at least one movably mounted fixing element (18a; 18a'; 18b, 20b, 22b; 18c; 18d), for fixing the tool connection element (14a; 14b; 14c; 14d) and the suction apparatus connection element (16a; 16b; 16c, 16d) against a movement relative to each other in at least one direction, **characterized in that** the tool connection element (14a; 14b; 14c; 14d) is in the form of a tool-side connecting branch and **in that** the fixing element (18a; 18a'; 18b, 20b, 22b; 18c; 18d) is in the form of a closed circular ring.

2. Extraction connection system according to Claim 1, **characterized in that** the fixing element (18a; 18a'; 18b, 20b, 22b; 18c; 18d) is mounted movably on the suction apparatus connection element (16a; 16b; 16c, 16d) .

3. Extraction connection system according to either of the preceding claims, **characterized in that** the fixing element (18a; 18a'; 18b, 20b, 22b) is arranged in a receiving recess (26a; 26b, 28b, 30b) of the suction apparatus connection element (16a; 16b).

4. Extraction connection system according to one of the preceding claims, **characterized in that** the fixing element (18a; 18a') is of annular design.

5. Extraction connection system according to one of the preceding claims, **characterized in that** the fixing element (18a') has at least one articulation region (32a', 34a').

6. Extraction connection system according to one of the preceding claims, **characterized in that** the tool connection element (14a; 14b) comprises at least two connecting regions (38a, 40a; 38b, 40b) which differ from each other, as viewed in a connecting direction of movement (36a; 36b) of the tool connection element (14a; 14b).

7. Extraction connection system according to one of the preceding claims, **characterized in that** the fixing unit (24b) comprises at least one spring element (42b) which acts upon an operating element (44b) of the fixing unit (24b) with a spring force.

8. Extraction connection system according to one of the preceding claims, **characterized in that** the fixing unit (24b) comprises at least one operating element (44b) which, in at least one state, enables a movement option of the fixing element (18b, 20b, 22b) into a release position.

9. Extraction connection system according to one of the preceding claims, **characterized in that** the fixing unit (24b) comprises at least one operating element (44b) which is of annular design.

10. Extraction connection system according to one of the preceding claims, **characterized in that** the tool connection element (14b) has at least one fixing element decoupling surface (94b) which, at least in one state, moves the fixing element (18b, 20b, 24b) into a release position.

11. Machine tool machining system comprising at least one extraction connection system according to one of the preceding claims, comprising at least one portable machine tool which comprises at least the tool connection element of the extraction connection system, and comprising at least one dust extraction device, in particular vacuum cleaner, which comprises at least the suction apparatus connection element of the extraction connection system.

## Revendications

1. Système de raccordement d'aspiration pour machines-outils portatives (12a), lequel système est destiné à relier une machine-outil portative (12a) et un dispositif d'aspiration de poussière (46a) pour une aspiration de poussière d'enlèvement se produisant pendant un usinage d'une pièce au moyen de la machine-outil portative (12a), comportant au moins un élément de raccordement de machine (14a ; 14b ; 14c ; 14d), comportant au moins un élément de raccordement d'aspirateur (16a ; 16b ; 16c, 16d), qui est réalisé comme une tubulure de raccordement côté aspirateur, dans lequel l'élément de raccordement de machine (14a ; 14b ; 14c ; 14d) et l'élément de raccordement d'aspirateur (16a ; 16b ; 16c, 16d) sont destinés à être reliés l'un à l'autre, et comportant au moins une unité de fixation (24a ; 24a' ; 24b ; 24c ; 24d) comprenant au moins un élément de fixation (18a ; 18a' ; 18b, 20b, 22b ; 18c ; 18d) monté mobile pour une fixation de l'élément de raccordement de machine (14a ; 14b ; 14c ; 14d) et de l'élément de raccordement d'aspirateur (16a ; 16b ; 16c, 16d) de manière à empêcher un déplacement l'un par rapport à l'autre dans au moins une direction, **caractérisé en ce que** l'élément de raccordement de machine (14a ; 14b ; 14c ; 14d) est réalisé comme une tubulure de raccordement côté machine et l'élément de fixation (18a' ; 18a' ; 18b, 20b, 22b ; 18c ; 18d) est réalisé comme un anneau circulaire fermé.

2. Système de raccordement d'aspiration selon la revendication 1, **caractérisé en ce que** l'élément de fixation (18a ; 18a' ; 18b, 20b, 22b ; 18c ; 18d) est monté mobile sur l'élément de raccordement d'aspirateur (16a ; 16b ; 16c, 16d).

3. Système de raccordement d'aspiration selon l'une des revendications précédentes, **caractérisé en ce que** l'élément de fixation (18a ; 18a' ; 18b, 20b, 22b) est disposé dans un évidement de réception (26a ; 26b, 28b, 30b) de l'élément de raccordement d'aspirateur (16a ; 16b).

4. Système de raccordement d'aspiration selon l'une des revendications précédentes, **caractérisé en ce que** l'élément de fixation (18a ; 18a') est réalisé de manière annulaire.

5. Système de raccordement d'aspiration selon l'une des revendications précédentes, **caractérisé en ce que** l'élément de fixation (18a') comprend au moins une région d'articulation (32a', 34a').

6. Système de raccordement d'aspiration selon l'une des revendications précédentes, **caractérisé en ce que** l'élément de raccordement de machine (14a ; 14b) comporte, considéré le long d'une direction de déplacement de liaison (36a ; 36b) de l'élément de raccordement de machine (14a ; 14b), au moins deux régions de liaison (38a, 40a ; 38b, 40b) différentes l'une de l'autre.

7. Système de raccordement d'aspiration selon l'une des revendications précédentes, **caractérisé en ce que** l'unité de fixation (24b) comporte au moins un élément ressort (42b) qui soumet un élément de commande (44b) de l'unité de fixation (24b) à une force de ressort.

8. Système de raccordement d'aspiration selon l'une des revendications précédentes, **caractérisé en ce que** l'unité de fixation (24b) comporte au moins un élément de commande (44b) qui, dans au moins un état, autorise une possibilité de déplacement de l'élément de fixation (18b, 20b, 22b) dans une position de libération.

9. Système de raccordement d'aspiration selon l'une des revendications précédentes, **caractérisé en ce que** l'unité de fixation (24b) comporte au moins un élément de commande (44b) qui est réalisé de manière annulaire.

10. Système de raccordement d'aspiration selon l'une des revendications précédentes, **caractérisé en ce que** l'élément de raccordement de machine (14b) comprend au moins une surface de désaccouplement d'élément de fixation (94b) qui, au moins dans un état, déplace l'élément de fixation (18b, 20b, 24b) dans une position de libération.

11. Système d'usinage par machine-outil comportant au moins un système de raccordement d'aspiration selon l'une des revendications précédentes, comportant au moins une machine-outil portative qui comprend au moins l'élément de raccordement de machine du système de raccordement d'aspiration, et comportant au moins un dispositif d'aspiration de poussière, en particulier un aspirateur, qui comporte au moins l'élément de raccordement d'aspirateur du système de raccordement d'aspiration.
